# EUROPEAN PATENT SPECIFICATION

(11) **EP 2 959 954 B1**
(45) Date of publication and mention of the grant of the patent: **18.10.2017**
(21) Application number: 14174034.0
(22) Date of filing: 26.06.2014
(51) Int. Cl.: B01D 36/00

(54) **Accessory unit for a fuel-filter for internal-combustion engines**
Zubehörvorrichtung für einen Kraftstofffilter für Verbrennungsmotoren
Unité accessoire d'un filtre à carburant pour moteurs à combustion interne

(43) Date of publication of application: 30.12.2015
(73) Proprietor: Littelfuse Italy S.r.l., 20122 Milano (IT)
(72) Inventor: Salvatore, Osvaldo, 20122 Milano (IT)
(74) Representative: Frontoni, Stefano

(56) References cited:
- JP-A- S6 411 609
- US-A- 4 933 093
- US-A1- 2011 155 656

## Description

### Field of the invention

The present invention relates to an accessory unit for draining water for a fuel filter for internal-combustion engines suitable for separating water present in the fuel.

### Prior relevant art

Known in the art is a wide range of systems for draining water in fuel filters for internal-combustion engines, in particular diesel filters. The most recent draining systems are of an automatic kind and basically belong in two distinct types.

A first type envisages use of a solenoid valve for discharging the water, at least two water-level sensors, and possibly a micro pump, all these elements being controlled by the engine control unit.

The second type envisages, instead, the use of semi-permeable membranes that are pre-arranged for being traversed by the water but not by the fuel and that consequently induce a mechanism of natural draining of the water. Draining systems of this second type are known, for example, from the prior documents JP-61216701 and JP-1011609. For proper operation of the semi-permeable membranes it is necessary for their face facing upstream to be kept constantly covered by a layer of water. For this purpose, some systems, such as the ones described in the documents JP-61216701 and JP-1011609, envisage the use of an additional membrane (as in the document JP-1011609) or else of a discharge duct of restricted diameter (as in the document JP-61216701), for keeping within the filter a level of water such as to cover the semi-permeable membrane. Other systems envisage, instead, the use of a solenoid valve and of a water-level sensor associated thereto.

All the draining systems of both of the types specified above are characterized in that they are integrated in the fuel-filtering device, thus rendering necessary an *ad hoc* design of the device, which, as compared to devices without automatic draining systems, is hence structurally more complex and costly to produce. Moreover, in these systems, the water separated from the fuel remains, before being discharged, in the same chamber in which the filtering diaphragm is present. This situation entails the risk of formation, within the filter, of colonies of bacteria and fungi, owing to the presence of water, which may lead to a fast deterioration of the diaphragm. US2011/155656A1 discloses a fuel filter having a filter element for filtering out particles and water from a fuel flowing through the fuel filter and having a water drainage unit for conveying filtered-out water out of the fuel filter, in which the water drainage unit is embodied as a stand-alone unit that may be separated from the filter element as needed. Also a semipermeable membrane that is permeable to water rests flat on a support. Alternatively or in addition, the water drainage unit is provided with a porous element for the evaporation of the separated water. In another embodiment two water-permeable semipermeable and hydrophilic membranes are provided. Finally, the filter element is embodied essentially in the form of a hollow cylinder in which at least part of the water drainage unit may be situated on the interior of the hollow cylinder. Finally, it should be noted that in this technical field there is still felt the need to be able to provide the filtering devices already installed on a vehicle with an automatic draining system, in a simple and fast way that respects the environment, and with contained costs.

### Object of the invention

In this context, the object of the present invention is to provide a remedy to the drawbacks and limits, indicated above, of the known art.

The above object is achieved via an accessory unit for draining water presenting the characteristics indicated in Claim 1.

The claims form an integral part of the technical teaching provided herein in relation to the invention.

### Brief description of the drawings

Further characteristics and advantages of the invention will emerge clearly from the ensuing description with reference and annexed drawings, which are provided purely by way of non-limiting example and in which:
- Figure 1 is a cross-sectional view of a filtering device of a conventional type;
- Figure 2 is a perspective view of an embodiment of the accessory unit described herein;
- Figure 3 is an exploded perspective view of the unit of Figure 2;
- Figure 4 is a cross-sectional view of the unit of Figure 2, according to the plane IV-IV represented in Figure 3;
- Figure 5 is a schematic cross-sectional view of a draining assembly provided with the unit of Figure 2;
- Figure 6 is a cross-sectional view of a laminar structure provided in the draining assembly of Figure 5;
- Figure 6A illustrates a second example of draining assembly provided in the unit of Figure 2;
- Figure 7 is a plan view of the laminar structure of Figure 6;
- Figure 8 is a perspective view of a further embodiment of the accessory unit described herein;
- Figure 9 is a cross-sectional view of the unit of Figure 8, according to the plane VIII-VIII illustrated in Figure 8; and
- Figure 10 is a perspective view of a further embodiment of the accessory unit described herein.

### Detailed description of some embodiments of the invention.

In the ensuing description, various specific details are illustrated aimed at providing an in-depth understanding of the embodiments. The embodiments may be provided without one or more of the specific details, or with other methods, components, or materials, etc. In other cases, known structures, materials, or operations are not shown or described in detail so that various aspects of the embodiment will not be obscured.

The references used herein are provided only for convenience and hence do not define the sphere of protection or the scope of the embodiments.

The present invention regards an accessory unit for draining water for a fuel filter for internal-combustion engines that is suitable for separating the water present in the fuel. This unit constitutes a separate assembly with respect to the filter, which can be mounted thereon as accessory. In this connection, as will be seen in greater detail hereinafter, the unit described herein can be associated either to filters that are still to be installed on the vehicle or to filters that are already installed.

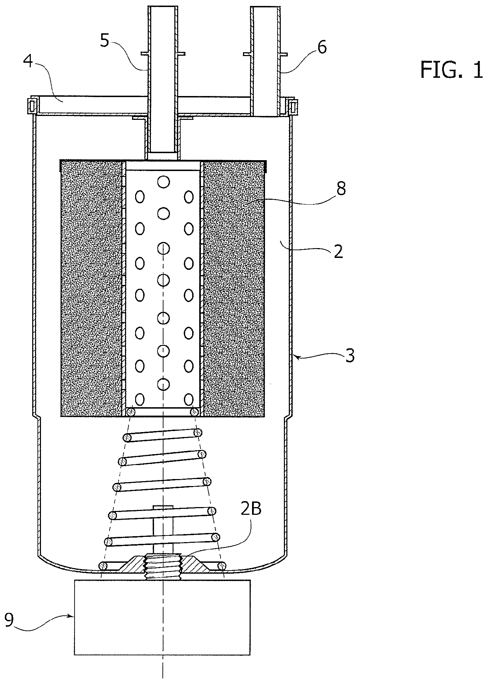

Figure 1 illustrates an example of filtering device commonly used in diesel engines for filtering the diesel, separating the water contained therein. In general, said filtering device comprises a container 3, which defines a filtering chamber 2, a filtering diaphragm 8, with a capacity of separation of the water from the diesel by coalescence, set within said chamber, and a head 4 that closes the container 3 and is provided with an inlet 6 and an outlet 5, respectively for entry of the fuel to be filtered into the chamber 2 and exit of the filtered fuel therefrom. The bottom of the container has an opening 2b, mounted on which is a water-level sensor 9 having the function of signalling the need to empty the filter from the water that has collected in the filtering chamber 2, whenever the water in the filter exceeds a given value. In order to discharge the water, the filtering device may, for example, be provided with a discharge hole, normally kept closed by a plug that can be opened for this purpose(the hole and the plug are not visible).

The unit described herein is configured for being mounted on devices of the type described above so as to provide them with a new draining system that is more reliable and altogether automatic.

In general, the accessory unit described herein - designated in the figures by the reference 100 - comprises:
- a casing 12 defining a collection chamber C;
- an opening 14 for discharging the water from the casing; and
- a laminar structure 22 that divides the collection chamber from the water-discharge opening 14 and that is configured for being traversed by the water but not by the fuel.

In various embodiments, as in the ones illustrated, the casing 12 has a hydraulic-connection portion that is configured for engaging the aforesaid opening 2b of the container of the filter so as to set the collection chamber C in communication with the filtering chamber 2 and moreover has means for its removable connection to said container.

In various embodiments, as in the one illustrated, the casing comprises a half-shell body 12' having a substantially cylindrical shape, which has a cylindrical side wall 12A closed at the top by a circular plane wall 12B. The latter is provided with the aforesaid hydraulic-connection portion, preferably in a central region thereof. In various embodiments, as in the one illustrated, this portion is, in particular, constituted by a tubular connector 16 of suitable dimensions for engaging in a sealed way the opening 2b provided on the bottom of the container of the filter. Coupling between the connector 16 and the opening 2b must be such as to prevent exit of liquid on the outside of the filter and of the accessory unit. For this purpose, between the connector and the opening there may be provided one or more gaskets (not illustrated).

In various preferred embodiments, the same tubular connector 16 has on the outside a threaded portion 16', which is designed to engage a corresponding portion of the opening 2b, which is also threaded, in order to provide the mechanical connection between the device and the accessory unit. This threaded portion evidently constitutes the connection means indicated above. It should be noted that the above means can be obtained also in other ways and do not necessarily have to be provided on the connector 16. For example, the above means may be constituted by slot-in formations made on the top wall of the unit and designed to co-operate with corresponding means made on the bottom of the container 3 of the filter.

The laminar structure 22 is mounted on the inside of the side wall 12A of the casing, preferably at the bottom rim thereof, identifying between the laminar structure itself and the top wall 12B the collection chamber C. In various preferred embodiments, the laminar structure comprises a pervaporation membrane 22A configured for being traversed by water but not by fuel. The mechanism whereby said membrane allows passage of water alone depends upon a chemico/physical affinity that the material that constitutes the membrane possesses in regard to water. Moreover, the laminar structure comprises two meshes made of hydrophilic material 22B (for example, nylon), which are set, respectively, in contact with the top part and the bottom part of the membrane 22A, and have the function of protecting the structural integrity of the membrane. In particular, the top mesh has a function both of mechanical protection and of protection from fouling, in so far as it determines formation of a liquid gap, between the mesh itself and the membrane, which enables the latter to be kept clean. The bottom mesh performs, instead, principally the function of protecting the membrane from the dirt coming from the external environment. Finally, the laminar structure 22 comprises two further meshes 22C, made of stainless steel or other material of adequate chemical resistance and mechanical strength, which are set against the two nylon meshes 22B and have the function of increasing the global mechanical strength of the structure.

The various layers of the structure 22 are held together via a sealant 24, which is applied at the outermost peripheral portion of the structure, englobing said portion, i.e., setting itself without solution of continuity on the outer faces of the structure and between the various layers thereof.

In various preferred embodiments, the laminar structure 22 is set between two perforated plates 26, which press on its peripheral portion englobed in the sealant, via annular gaskets 28 superimposed thereon. These plates have through holes 26', which are evenly distributed, at least over all the area of the plates that overlies the non-sealed central portion of the laminar structure. The holes of each plate have, on their ends facing the laminar structure, flared edges 26A, which have the function of distributing the water on the laminar structure over a surface greater than the area of the holes 26' and of preventing shear stresses on said structure when this comes into contact with the plates. The plates 26 have the function of supporting the laminar structure 22, preventing this from tearing as a result of the difference in pressure, to which it is subjected, between the inside of the unit and the atmosphere.

The draining assembly constituted by the laminar structure 22 and by the two plates 26 is fixed to the side wall 12A of the casing via a coupling of a removable type so as to enable change of the laminar structure when necessary. In particular, in various preferred embodiments, as in the one illustrated, the side wall of the body 12' defines one or more contrast portions (not illustrated), against which the draining assembly referred to above is set. The casing 12 further comprises a ring-nut 12", provided with central opening, which is screwed on a bottom edge of the wall 12A, pressing the assembly in question against the aforesaid contrast portions, so as to grip the latter between the ring-nut itself and the contrast portions. The central opening of the ring-nut defines the discharge opening 14, referred to previously. It should be noted that the half-shell 12' has inside, at the seat in which it receives the draining assembly, appropriate formations designed to prevent rotation of the plates 26 during screwing of the ring-nut on the half-shell, the purpose being to prevent the laminar structure from undergoing shear stresses that might displace it from its perfectly extended condition.

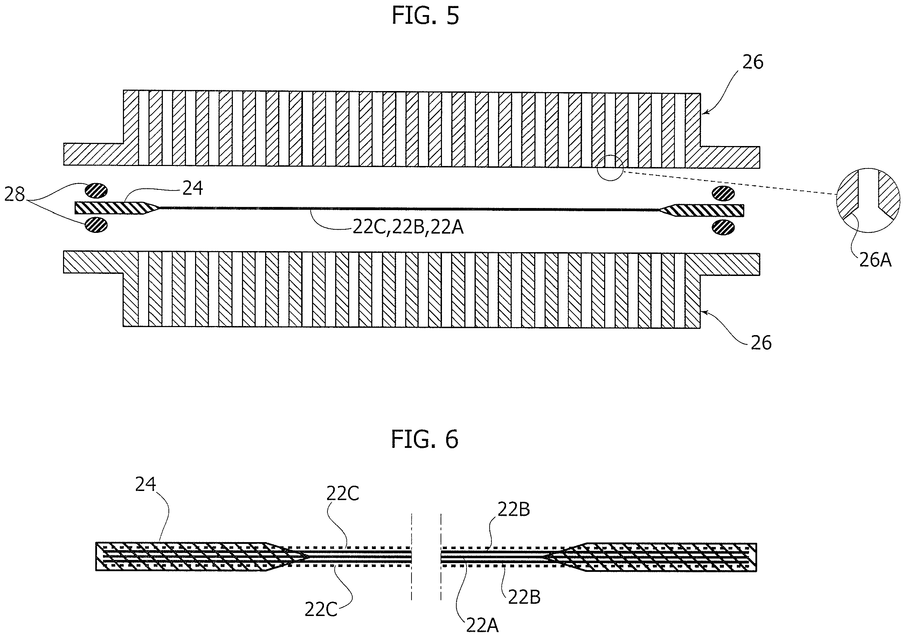

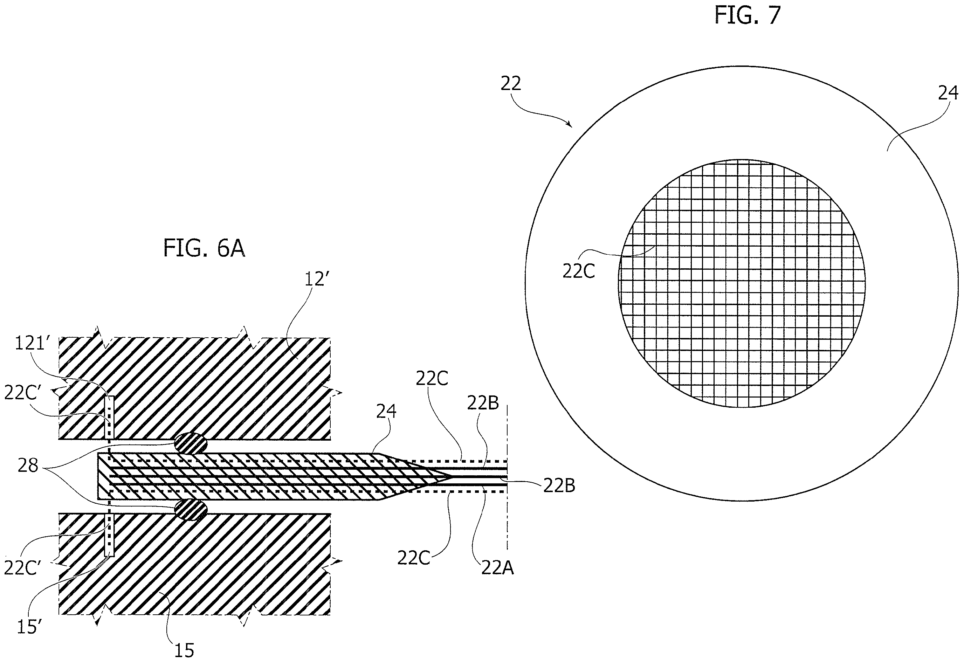

In alternative embodiments, as in the one illustrated in Figure 6A, the plates 26 are absent, whereas the meshes 22C have a peripheral portion folded back 22C' oriented in a direction transverse to the plane containing the laminar structure. In this case, the half-shell 12' can contain a seat 121' that will receive the folded-back portion of the mesh with which it is in direct contact. On the side of the laminar structure opposite to the half-shell 12' a ring 15 is instead provided, which also has a seat 15' designed to receive the folded-back portion 22C' of the corresponding mesh 22C, which, as a result of screwing of the ring-nut 12" on the half-shell 12', presses the laminar structure against the half-shell 12', gripping the structure between itself and the half-shell. The folded-back portions 22C' of the meshes 22C have the function of preventing the laminar structure from possibly sliding out from its position between the ring 15 and the half-shell 12' as a result of the pressures within the chamber C. Also in this case, the half-shell 12' has inside appropriate formations designed to prevent rotation of the ring 15 during screwing of the ring-nut 12" on the half-shell, the purpose being to prevent the laminar structure from undergoing shear stresses that might displace it from its perfectly extended condition.

In the condition in which the unit 100 is mounted on the filtering device 1, the chamber 2 of the device and the collection chamber C of the unit are in communication so that the diesel fills also the chamber C itself. The structure 22, which is permeable only to water, prevents the fuel from coming out through the discharge opening 14. The filtering diaphragm 8, provided inside the device 1, separates the water from the fuel, and the water, as a result of its specific weight being greater than that of diesel, moves from the filtering chamber 2 as far as into the collection chamber C. It is evident that, in order for the water to be able to enter the chamber C, a corresponding volume of fuel must make space for it by returning to the chamber 2 of the device. In order to facilitate this exchange, the tubular connector 16 has, inside, an elongated pipe 17, which projects above the top edge of the connector and has the function of constituting a privileged passage for the diesel towards the filtering chamber 2. As the water reaches the chamber C it finally deposits on the laminar structure 22, being discharged by the latter through the opening 14.

In the light of the foregoing, it is evident how, in operation, the accessory unit 100 is thus able to operate in a continuous way, discharging on the outside all the water that is over time separated from the diesel by the filtering device. The draining system implemented thereby is totally spontaneous and automatic and does not require intervention of electromechanical members, and for this reason is highly reliable.

In various preferred embodiments, the unit 100 may in any case be also equipped with at least one water-level sensor 32, set at the top wall 12B of the casing, and moreover with a safety duct 19, for discharging the water, provided at the side wall 12A, above the draining assembly, and normally closed by an open/close element or plug (not illustrated). This sensor, set in a higher position than the safety duct, has the function of signalling an anomalous accumulation of water within the collection chamber C so as to enable a timely intervention for discharging the water through the duct 19. In various preferred embodiments, it is moreover possible to provide a second water-level sensor, which is also set on the wall 12B, the detection height of which is above the safety duct 19 but underneath the detection height of the sensor 32. This second sensor is designed to indicate reaching of a given minimum height by the fuel/water interface at which the duct 19 closes to prevent dispersion of fuel into the environment.

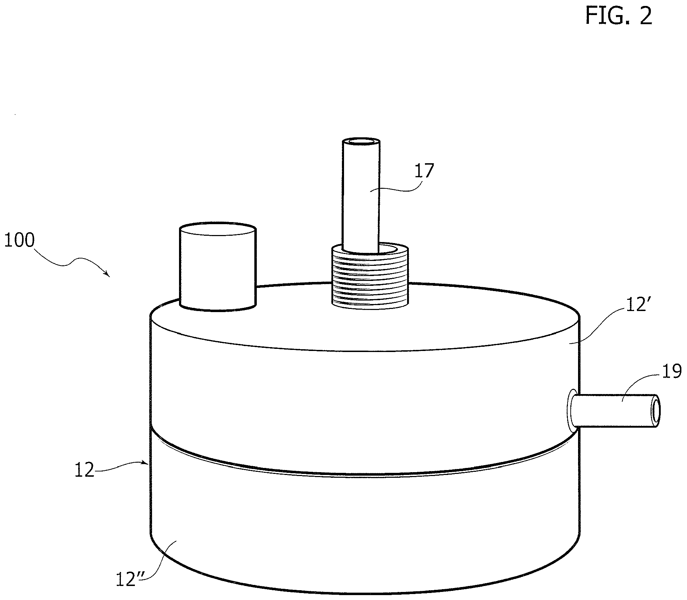

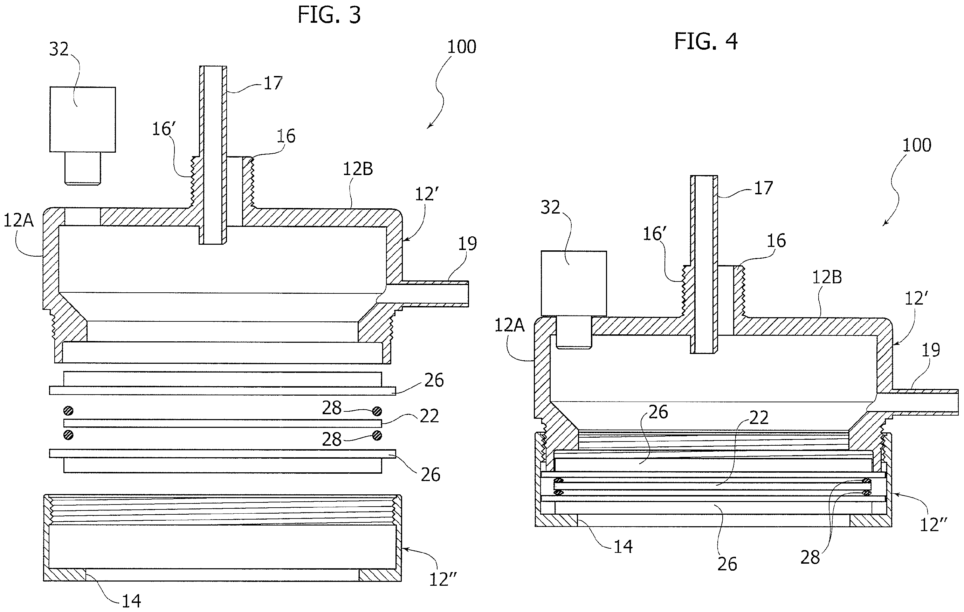

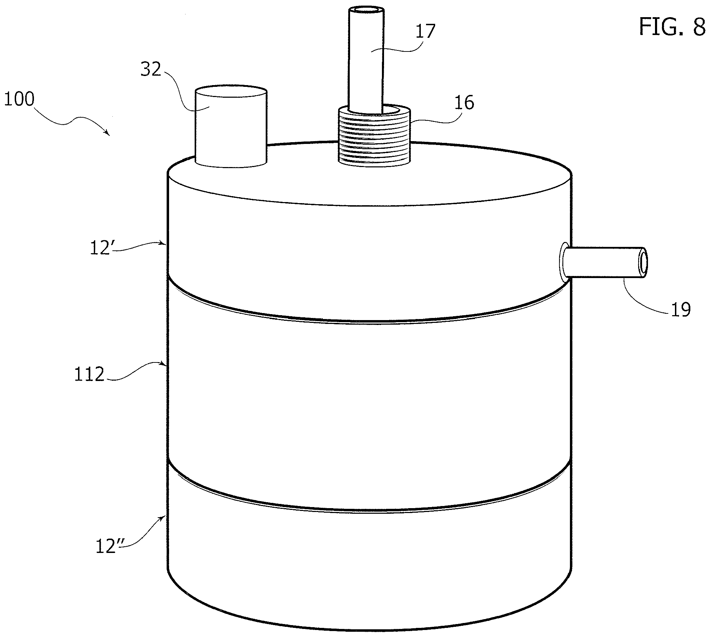

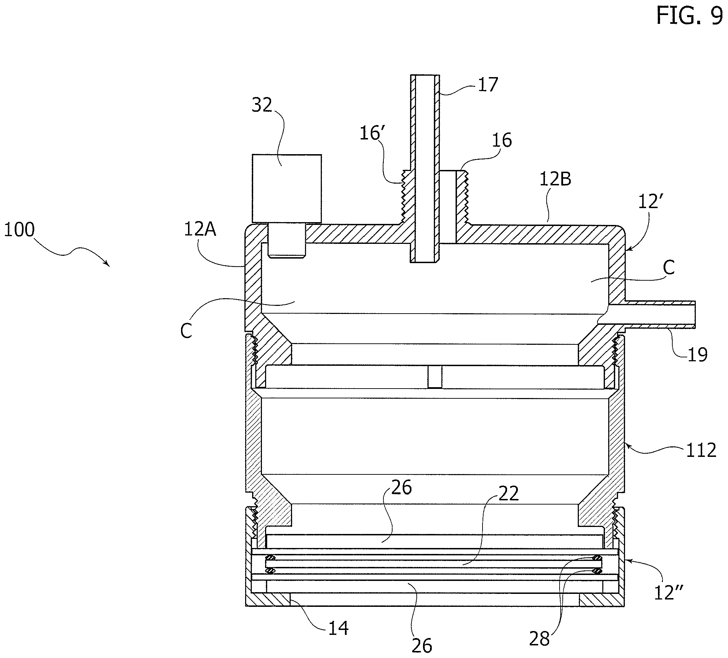

In various embodiments, as in the ones illustrated in Figures 8 to 10, the unit 100 may also comprise one or more accessory modules 112, configured as extensions of the body 12' and suitable for being coupled to the latter for increasing the volume of the collection chamber C. As illustrated in Figure 9, the module 112 is screwed on the bottom end of the body 12', and the draining assembly is, in this case, fixed to this module, via the ring-nut 12", with the same modalities described above with reference to Figures 2 to 7. For this purpose, the module 112 has the same contrast rims for fixing the draining assembly that are provided in the tubular body 12'.

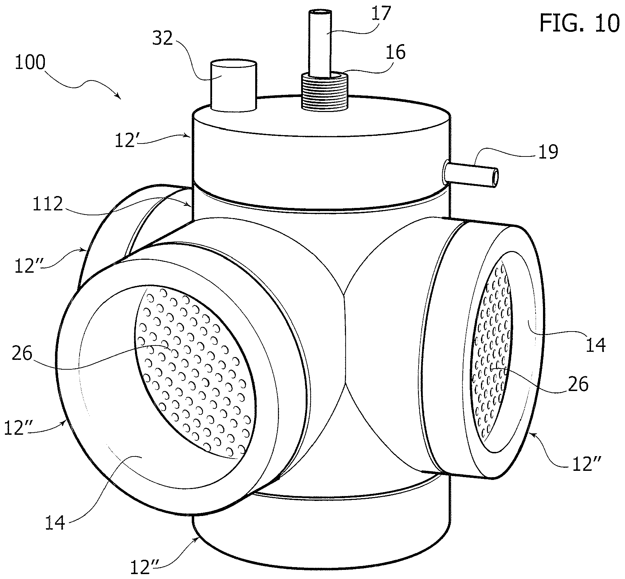

The module in question can also provide a configuration suitable for receiving a plurality of draining assemblies, as in the example illustrated in Figure 10. In this case, the module is constituted by a hollow body defining a first opening with which the tubular body 12' couples, and a number of further openings equal to the number of draining assemblies envisaged, which are arranged in different planes, for example planes parallel and/or orthogonal to one another, and where the various draining assemblies are mounted, with the aid of ring-nuts altogether similar to or the same as the ring-nut 12" described with reference to Figures 2 to 8 (and which are also designated by the reference 12" in Figure 10).

Of course, without prejudice to the principle of the invention, the details of construction and the embodiments may vary, even significantly, with respect to what has been illustrated herein purely by way of non-limiting example, without thereby departing from the scope of the invention, as defined by the annexed claims. In this connection, it should be noted, for example, that the unit 100 could also be without the perforated plates 26 described above.

## Claims

1. An accessory unit for draining water for a fuel filter for internal-combustion engines suitable for separating the water present in the fuel, wherein said filter comprises a container (3) defining a filtering chamber (2), a filtering element (8) set within said chamber, a head (4) that closes said container and has an inlet (6) and an outlet (5), respectively for entry into said chamber (2) of the fuel to be filtered and outlet therefrom of the filtered fuel, wherein said container (3) has an opening (2b) for access from outside into said filtering chamber, said accessory unit comprising:
- a casing (12) defining a collection chamber (C) ;
- an opening (14) for discharging the water from the casing (12); and
- a laminar structure (22) that divides said collection chamber (C) from said opening (14) for discharging the water and is configured for being traversed by the water but not by the fuel,
wherein said casing (12) has a hydraulic-connection portion (16) that is configured for engaging said opening (2b) of said container (3) so as to set said collection chamber (C) in communication with said filtering chamber (2), and wherein said casing (12) has means (16') for connecting said casing (12) to said container (3) of said filter in a removable way,
said unit being **characterised in that** said laminar structure (22) comprises an asymmetrical pervaporation membrane (22A), two meshes made of hydrophilic material (22B) arranged on the opposite faces of said membrane (22A), and two further meshes (22C), preferably made of metal material, each set against a respective one of said meshes made of hydrophilic material.

2. The unit according to Claim 1, wherein said means (16') for connecting said casing to said container of said filter in a removable way are obtained on said hydraulic-connection portion (16).

3. The unit according to Claim 1, wherein said membrane (22A) and said meshes (22B, 22C) are held together via a sealing material (24) that englobes the outermost peripheral portion of said laminar structure.

4. The unit according to any one of the preceding claims, wherein said laminar structure (22) is pressed between two perforated plates (26).

5. The unit according to Claim 4, wherein said plates have through holes (26') evenly distributed, in a central region thereof.

6. The unit according to Claim 5, wherein the holes of each plate have flared edges (26A) on their respective ends facing said laminar structure.

7. The unit according to any one of the preceding claims,
wherein said casing comprises a half-shell body (12') having a substantially cylindrical shape, which has a cylindrical side wall (12A) closed at the top by a circular wall (12B);
wherein said hydraulic-connection portion is obtained on said circular wall; and
wherein said laminar structure is coupled to said side wall (12A) in a removable way.

8. The unit according to Claim 7, wherein said casing comprises a ring-nut (12"), which defines said discharge opening (14) and is coupled in a removable way to a rim of said side wall (12A), said laminar structure (22) being gripped between said ring-nut and corresponding contrast portions obtained on the inner side of said side wall (12A).

9. The unit according to any one of the preceding claims, wherein said hydraulic-connection portion is constituted by a tubular connector, which is preferably externally threaded.

10. The unit according to Claim 9, wherein said tubular connector (16) has, inside, a pipe (17) of smaller section that projects above the top edge of said connector, and underneath the latter.

## Patentansprüche

1. Zusatzvorrichtung zum Ableiten von Wasser für einen Kraftstofffilter für Verbrennungsmotoren, geeignet zum Trennen des im Kraftstoff vorhandenen Wassers, der Filter umfassend einen Behälter (3), der eine Filtrierkammer (2) abgrenzt, ein Filterelement (8), das innerhalb der Kammer angeordnet ist, einen Boden (4), der den Behälter schließt und einen Einlass (6) und einen Auslass (5) für den Eintritt des zu filternden Kraftstoffs in die Kammer (2) beziehungsweise den Abfluss des gefilterten Kraftstoffs aus derselben, wobei der Behälter (3) eine Öffnung (2b) für den Zugriff in die Filtrierkammer von außen aufweist, die Zusatzvorrichtung umfassend:
- ein Gehäuse (12), das eine Sammelkammer (C) abgrenzt;
- eine Ablauföffnung (14) für das Wasser aus dem Gehäuse (12); und
- einen Lamellenaufbau (22), welcher die Sammelkammer (C) von der Ablauföffnung (14) für das Wasser trennt und derart ausgebildet ist, dass das Wasser durchfließen kann, der Kraftstoff jedoch nicht,
wobei das Gehäuse (12) einen hydraulischen Verbindungsabschnitt (16) aufweist, der derart ausgebildet ist, dass er in die Öffnung (2b) des Behälters (3) eingreift, sodass die Sammelkammer (C) mit der Filtrierkammer (2) verbunden ist, und wobei das Gehäuse (12) Mittel (16') zum abnehmbaren Verbinden des Gehäuses (12) mit dem Behälter (3) des Filters aufweist,
**dadurch gekennzeichnet, dass** der Lamellenaufbau (22) eine asymmetrische Pervaporationsmembran (22A) umfasst, wobei zwei aus hydrophilem Material gefertigte Siebe (22B) an den gegenüberliegenden Seiten der Membran (22A) angeordnet sind, und zwei weitere Siebe (22C), vorzugsweise aus Metallmaterial gefertigt, die jeweils an einem der Siebe aus hydrophilem Material angeordnet sind.

2. Vorrichtung nach Anspruch 1, wobei die Mittel (16') zum abnehmbaren Verbinden des Gehäuses mit dem Behälter des Filters auf dem hydraulischen Verbindungsabschnitt (16) geschaffen/angeordnet sind.

3. Vorrichtung nach Anspruch 1, wobei die Membran (22A) und die Siebe (22B, 22C) durch ein Dichtungsmaterial zusammengehalten sind (24), welches den äußersten Randabschnitt des Lamellenaufbaus umschließt.

4. Vorrichtung nach einem der vorstehenden Ansprüche, wobei der Lamellenaufbau (22) zwischen zwei Lochbleche (26) gepresst ist.

5. Vorrichtung nach Anspruch 4, wobei die Bleche Durchgangsbohrungen aufweisen (26"), die gleichmäßig in einem mittigen Bereich derselben verteilt sind.

6. Vorrichtung nach Anspruch 5, wobei die Bohrungen jedes der Bleche an ihren jeweiligen Enden, welche dem Lamellenaufbau zugewandt sind, gebördelte Kanten (26A) aufweisen.

7. Vorrichtung nach einem der vorstehenden Ansprüche,
wobei das Gehäuse einen eine im Wesentlichen zylindrische Form aufweisenden Halbschalenaufbau (12') umfasst, der eine zylindrische Seitenwand (12A) aufweist, die oben durch eine kreisförmige Wand (12B) geschlossen ist;
wobei der hydraulische Verbindungsabschnitt an der kreisförmigen Wand geschaffen ist; und
wobei der Lamellenaufbau abnehmbar mit der Seitenwand (12A) verbunden ist.

8. Vorrichtung nach Anspruch 7, wobei das Gehäuse eine Ringmutter (12") umfasst, welche die Ablauföffnung (14) abgrenzt und abnehmbar mit einem Rand der Seitenwand (12A) verbunden ist, wobei der Lamellenaufbau (22) zwischen der Ringmutter und entsprechenden Gegenabschnitten, die an der Innenseite der Seitenwand (12A) geschaffen sind, festgeklemmt ist.

9. Vorrichtung nach einem der vorstehenden Ansprüche, wobei der hydraulische Verbindungsabschnitt durch einen rohrförmigen Verbinder gebildet ist, der vorzugsweise ein Außengewinde aufweist.

10. Vorrichtung nach Anspruch 9, wobei der rohrförmige Verbinder (16) innen ein Rohr (17) kleineren Querschnitts umfasst, welches über die Oberkante des Verbinders hinaus sowie unterhalb desselben vorsteht.

## Revendications

1. Unité accessoire pour évacuer l'eau pour un filtre à carburant pour des moteurs à combustion interne, appropriée pour séparer l'eau présente dans le carburant, dans laquelle ledit filtre comprend un récipient (3) définissant une chambre de filtration (2), un élément filtrant (8) placé à l'intérieur de ladite chambre, une tête (4) qui ferme ledit récipient et a une entrée (6) et une sortie (5), respectivement pour l'entrée dans ladite chambre (2) du carburant à filtrer et la sortie de cette dernière du carburant filtré, dans laquelle ledit récipient (3) a une ouverture (2b) pour avoir accès, depuis l'extérieur, à ladite chambre de filtration, ladite unité accessoire comprenant:
un boîtier (12) définissant une chambre de collecte (C) ;
une ouverture (14) pour décharger l'eau du boîtier (12) ; et
une structure laminaire (22) qui divise ladite chambre de collecte (C) de ladite ouverture (14) pour décharger l'eau et est configurée pour être traversée par l'eau, mais pas par le carburant,
dans laquelle ledit boîtier (12) a une partie de raccordement hydraulique (16) qui est configurée pour mettre en prise ladite ouverture (2b) dudit récipient (3) afin de placer ladite chambre de collecte (C) en communication avec ladite chambre de filtration (2), et dans lequel ledit boîtier (12) a des moyens (16') pour raccorder ledit boîtier (12) audit récipient (3) dudit filtre d'une manière amovible,
ladite unité étant **caractérisée en ce que** ladite structure laminaire (22) comprend une membrane d'évaporation asymétrique (22A), deux mailles réalisées à partir de matériau hydrophile (22B) agencées sur les faces opposées de ladite membrane (22A), et deux autres mailles (22C), de préférence réalisées à partir de matériau métallique, chacune placée contre une maille respective desdites mailles réalisées à partir de matériau hydrophile.

2. Unité selon la revendication 1, dans laquelle lesdits moyens (16') pour raccorder ledit boîtier audit récipient dudit filtre d'une manière amovible, sont obtenus sur ladite partie de raccordement hydraulique (16).

3. Unité selon la revendication 1, dans laquelle ladite membrane (22A) et lesdites mailles (22B, 22C) sont maintenues ensemble via un matériau d'étanchéité (24) qui englobe la partie périphérique située le plus à l'extérieur de ladite structure laminaire.

4. Unité selon l'une quelconque des revendications précédentes, dans laquelle ladite structure laminaire (22) est comprimée entre deux plaques perforées (26).

5. Unité selon la revendication 4, dans laquelle lesdites plaques ont des trous débouchants (26') régulièrement répartis, dans leur région centrale.

6. Unité selon la revendication 5, dans laquelle les trous de chaque plaque ont des bords évasés (26A) sur leurs extrémités respectives faisant face à ladite structure laminaire.

7. Unité selon l'une quelconque des revendications précédentes,
dans laquelle ledit boîtier comprend un corps de demi-coque (12') ayant une forme sensiblement cylindrique, qui a une paroi latérale cylindrique (12A) fermée au niveau de la partie supérieure par une paroi circulaire (12B) ;
dans laquelle ladite partie de raccordement hydraulique est obtenue sur ladite paroi circulaire ; et
dans laquelle ladite structure laminaire est couplée à ladite paroi latérale (12A) d'une manière amovible.

8. Unité selon la revendication 7, dans laquelle ledit boîtier comprend un écrou à oeil (12"), qui définit ladite ouverture de décharge (14) et est couplé d'une manière amovible, à un bord de ladite paroi latérale (12A), ladite structure laminaire (22) étant saisie entre ledit écrou à oeil et des parties de contraste correspondantes obtenues sur le côté interne de ladite paroi latérale (12A).

9. Unité selon l'une quelconque des revendications précédentes, dans laquelle ladite partie de raccordement hydraulique est constituée par un connecteur tubulaire, qui est de préférence extérieurement fileté.

10. Unité selon la revendication 9, dans laquelle ledit connecteur tubulaire (16) a, à l'intérieur, un tuyau (17) de plus petite section qui fait saillie au-dessus du bord supérieur dudit connecteur et au-dessous de ce dernier.
